# DEMANDE DE BREVET EUROPEEN

(11) **EP 0 943 491 A1**
(43) Date de publication de la demande: **22.09.1999**
(21) Numéro de dépôt: 99420070.7
(22) Date de dépôt: 12.03.1999
(51) Int. Cl.: B60P 3/20, B60H 1/32

(54) **Véhicule utilitaire pourvu d'un équipement frigorifique et ensemble frigorifique prêt à être monté**

(30) Priorité: 18.03.1998 FR 9803556
(71) Demandeur: Lamberet Constructions Isothermes, 01380 St-Cyr-sur-Menthon (FR)
(72) Inventeur: Churi, André, 71680 Creches sur Saone (FR)
(74) Mandataire: Guerre, Dominique

(57) **Abrégé**

Dans ce véhicule utilitaire pourvu d'un équipement frigorifique :
a) le compresseur (5) et son moteur électrique au moins sont regroupés et disposés à l'intérieur de l'habitacle de conduite B,
b) le condenseur (3) est disposé à l'intérieur du compartiment moteur A,
c) les différents composants de l'équipement frigorifique sont reliés entre eux par un ensemble de conduits (10, 12), et le moteur électrique du compresseur (3) est branché au circuit électrique du véhicule.

## Description

L'invention concerne le domaine des véhicules utilitaires pourvu d'un équipement frigorifique.

Elle concerne plus particulièrement les véhicules utilitaires de type camionnette dans lesquels la carrosserie de l'habitacle de conduite se prolonge jusqu'à l'arrière du véhicule pour former un caisson accessible par l'arrière par une ou deux portes, battantes ou relevables, ou par une ou deux portes latérales optionnelles, ou est prolongée par un caisson isothermique rapporté sur le châssis.

La transformation d'un véhicule utilitaire standard en véhicule frigorifique implique d'aménager un compartiment isolé thermiquement mais aussi de mettre en place un équipement frigorifique comprenant un évaporateur disposé dans le compartiment isolé, un condenseur et un compresseur d'un fluide frigorigène circulant entre condenseur et évaporateur.

Cette transformation nécessite d'avoir recours à un carrossier spécialisé dans l'isolation et dans le froid donc à une profession peu répandue. Cette transformation est également longue et coûteuse.

A cet inconvénient, il faut ajouter celui provenant de l'encombrement général du groupe frigorifique réunissant condenseur et compresseur. En effet, depuis longtemps et dans un but de simplicité, ces deux éléments sont disposés, éventuellement avec l'évaporateur, dans un groupe commun qui est en général disposé sur le toit de l'habitacle de conduite ou sur le toit du caisson, où il forme une proéminence disgracieuse et affectant l'aérodynamisme du véhicule.

Pour réduire cette proéminence, certains carrossiers intègrent tout ou partie du groupe dans le toit de la cabine ou du caisson. Cela nécessite de découper le toit, donc conduit à un surcoût de transformation et rend difficile la réutilisation ultérieure du véhicule, qui perd ainsi sur le montant de sa valeur d'occasion.

Le brevet belge 343 603 décrit un véhicule équipé d'un système réfrigérant, alimentant des évaporateurs disposés dans un caisson isotherme, et dont l'ensemble du groupe frigorifique est monté à demeure dans l'habitacle, avec ses moyens moteurs, sans aucune protection contre le bruit et le dégagement de chaleur.

Dans le brevet US 2 957 317 l'ensemble du groupe frigorifique, alimentant des évaporateurs disposés dans un caisson isothermique, est déposé avec le condenseur dans le compartiment moteur dont il exige une transformation irréversible. L'habitacle ne contient qu'un interrupteur agissant sur la ventilation du compartiment isotherme et un indicateur de température de ce compartiment.

La présente invention a pour objet de remédier à ces inconvénients en fournissant un équipement frigorifique éclaté, fourni à l'état démonté et pouvant être intégré dans le véhicule par tout mécanicien automobile sans avoir à modifier le châssis ou la carrosserie de celui-ci, et sans former une quelconque protubérance extérieure, tut en permettant la réutilisation ultérieure du véhicule.

L'invention est relative à un véhicule utilitaire comprenant un compartiment C isolé thermiquement par rapport à l'atmosphère extérieure, un habitacle B de conduite dudit véhicule, et un compartiment moteur A comprenant les organes dudit véhicule, dont moteur thermique et générateur électrique, et dans lequel l'équipement frigorifique comprend un évaporateur, disposé dans le compartiment C isolé thermiquement, un condenseur, un compresseur d'un fluide frigorigène mû par un moteur électrique avec lequel il forme un ensemble frigorifique disposé à l'intérieur de l'habitacle B, et des ensembles de conduits raccordant les différents composants de cet équipement frigorifique,

Selon l'invention, le condenseur est disposé à l'intérieur du compartiment moteur A, tandis que au moins le compresseur et son moteur électrique sont rassemblés dans une cassette amovible, constituée par un boîtier fermé et insonorisé, ledit boîtier comprenant au moins un panneau portant des organes de connexion respectivement, fluidiques et électriques, avec, respectivement, d'une part, le condenseur et l'évaporateur et, d'autre part, le circuit électrique du véhicule et un boîtier de contrôle et de commande disposés dans l'habitacle de conduite B, au niveau du tableau de bord.

Ainsi les différents éléments d'un groupe frigorifique sont répartis entre les trois compartiments du véhicule dans lesquels ils s'intègrent aisément en raison de leur faible encombrement individuel.

La cassette forme un ensemble monolithique qui facilite la mise en place de l'équipement frigorifique et réduit le temps de cette mise en place.

Avantageusement, le boîtier de la cassette contient un électro-ventilateur générant un flux d'air de refroidissement entre une bouche d'entrée et une bouche de sortie, ces deux bouches, ménagées dans la paroi du boîtier, étant reliées par des conduits, l'une, à une prise d'air extérieur, et l'autre, à une sortie de refoulement extérieure.

La cassette, qui par exemple est disposée sous l'un des sièges de l'habitacle de conduite, n'affecte en rien le volume utile de cet habitacle, et non par sa structure fermée et insonorisée, ne génère aucun désagrément pour le conducteur.

Dans une forme d'exécution préférée, cette cassette contient également un auto-transformateur assurant l'alimentation des divers moteurs électriques à partir du secteur lorsque le véhicule est à l'arrêt.

L'invention comprend également un ensemble frigorifique prêt à être monté et comprenant, à l'état de pièces détachées, les différents composants et au moins le compresseur et son moteur électrique, disposés dans une cassette, le condenseur, les conduits de raccordement des composants frigorifiques et les câbles électriques.

D'autres caractéristiques et avantages ressortiront de la description qui suit en référence au dessin schématique annexé représentant à titre d'exemple une forme d'exécution de l'équipement selon l'invention dans le cas de son montage sur un véhicule utilitaire à fourgon tôlé.

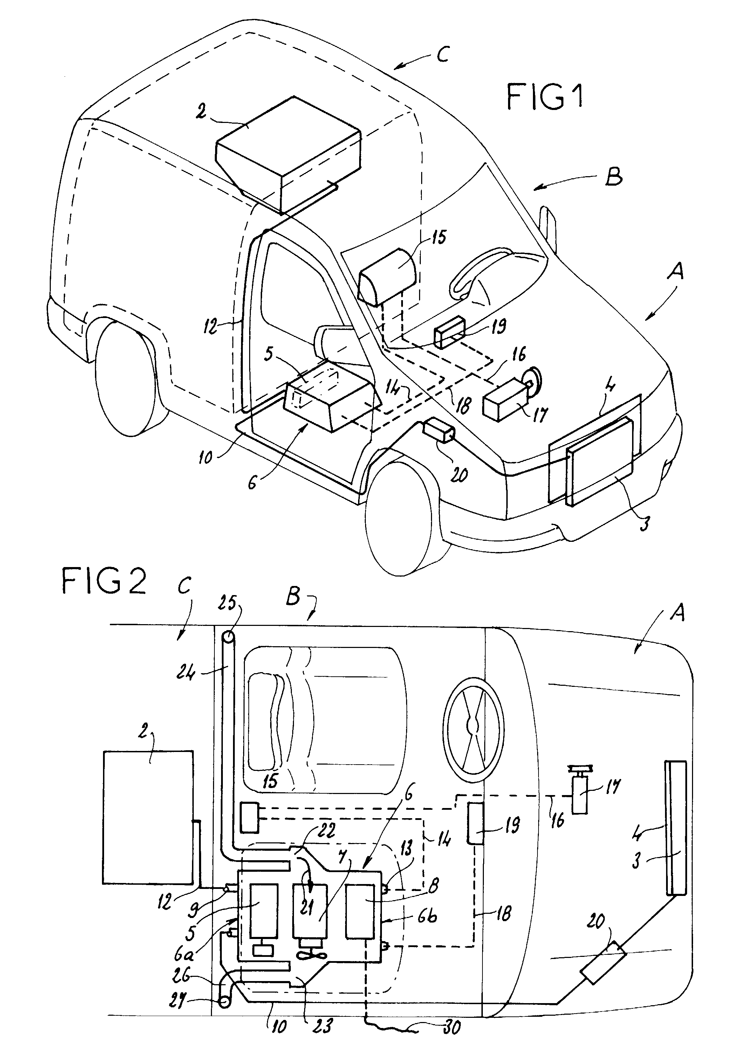

Figure 1 est une vue en perspective du véhicule.

Figure 2 est une vue partielle en plan par-dessus de son habitacle.

Dans ce dessin, la référence A désigne le compartiment moteur du véhicule, celle B son habitacle de conduite et celle C le compartiment isolé thermiquement.

L'équipement frigorifique comprend un évaporateur 2, disposé à l'intérieur du compartiment isolé C, un condenseur 3 disposé dans le compartiment moteur A, par exemple à l'avant du radiateur normal 4 du véhicule, et un compresseur 5 entraîné par un moteur électrique.

Dans la forme d'exécution représenté, le compresseur 5 est disposé dans une cassette 6 s'insérant sous le siège du passager dans l'habitacle B et contenant également un électro-ventilateur 7 et un auto-transformateur 8. Cette cassette comporte un panneau 6a portant des connexions 9 pour des conduits 10 et 12 aptes à véhiculer un fluide frigorigène entre respectivement le condenseur 3 et le compresseur 5 et ce compresseur et l'évaporateur 2. La cassette 6 comporte également un panneau 6b muni de connexions 13 pour des circuits électriques et, en particulier, pour un circuit d'alimentation 14 provenant d'un coffret 15. Ce dernier est lui-même relié, par un circuit 16, au circuit électrique du véhicule et par exemple au générateur électrique 17 disposé dans le compartiment moteur A. Une autre connexion 13 permet le raccordement, par un circuit 18, d'un boîtier de contrôle et de commande 19, disposé sur le tableau de bord ou à proximité, et permettant de contrôler la température dans le compartiment isolé C et d'ajuster le fonctionnement de la chaîne frigorifique.

Les différents composants de l'équipement frigorifique sont livrés à l'état démonté et peuvent installés dans le véhicule par un mécanicien automobile, c'est-à-dire par tout garagiste sous réserve qu'il fasse appel à un frigoriste pour doser la quantité de fluide frigorigène dans l'installation.

La mise en place nécessite donc de positionner les différents éléments dans le véhicule puis de les réunir par les conduits fluidiques ou par des circuits électriques. Pour gagner du temps, il est même possible d'obtenir en provenance du constructeur du véhicule, des châssis équipés d'origine d'un condenseur 3, puisque celui-ci a les caractéristiques de ceux utilisés pour assurer la climatisation des véhicules. Dans ces conditions, le montage nécessite uniquement de relier le condenseur à la cassette 6 au moyen de conduits 10, éventuellement équipés d'un déshydrateur 20.

La cassette 6 est avantageusement constituée par un boîtier fermé et insonorisé, comportant une bouche d'entrée 22 et une bouche de sortie 23. La bouche 22 est raccordée par un conduit 24 à une prise d'air extérieur 25, traversant le plancher ou le côté du véhicule, tandis que la bouche de sortie 23 est raccordée, par un conduit 26, à une bouche de refoulement 27 traversant le plancher du véhicule et débouchant à l'extérieur. Grâce à cela, l'électro-ventilateur 7 peut générer dans la cassette 6 un flux d'air de refroidissement abaissant la température intérieure de cette cassette.

Lorsque le moteur thermique du véhicule est en fonctionnement, l'électro-ventilateur 7 et le compresseur 5 sont alimentés par le générateur électrique 17, tandis que, lorsque le moteur thermique est à l'arrêt, cette alimentation est assurée par la batterie du véhicule. Pour ménager cette batterie, l'alimentation peut être assurée par un cordon électrique 30 se connectant sur le secteur et assurant l'alimentation de l'auto-transformateur 8.

Un tel équipement bien que plus particulièrement destiné aux fourgonnette ayant une capacité de 4m³, peut bien entendu être monté sur des camionnettes ayant une plus grande capacité.

Il ressort de ce qui précède que l'équipement selon l'invention combine, miniaturisation et modernisation, pour faciliter son intégration dans un véhicule standard conservant son intégrité et pouvant ainsi être retransformé sans dommage. L'équipement et en particulier les composants disposés dans l'habitacle ne réduisent pas l'habitabilité de celui-ci ni son confort puisque avec la cassette isolée et ventilée, les bruits de fonctionnement et les émissions de chaleur sont limitées. Enfin, la possibilité d'alimentation électrique de l'équipement par le circuit du véhicule ou par le secteur augmente les conditions d'utilisation du véhicule, puisque son compartiment de conservation peut être utilisé comme chambre froide de secours.

## Revendications

1. Véhicule utilitaire pourvu d'un équipement frigorifique,
a) ledit véhicule comprenant un compartiment C isolé thermiquement par rapport à l'atmosphère extérieure, un habitacle B de conduite dudit véhicule, et un compartiment moteur A comprenant les organes dudit véhicule, dont moteur thermique et générateur électrique,
b) l'équipement frigorifique comprenant un évaporateur (2), disposé dans le compartiment C isolé thermiquement, un condenseur (3), un compresseur (5) d'un fluide frigorigène mû par un moteur électrique avec lequel il forme un ensemble frigorifique disposé à l'intérieur de l'habitacle B, et des ensembles de conduits (10, 12) raccordant les différents composants de cet équipement frigorifique,
**caractérisé en ce que,** le condenseur (3) est disposé à l'intérieur du compartiment moteur A, tandis que au moins le compresseur (3) et son moteur électrique sont rassemblés dans une cassette amovible (6), constituée par un boîtier fermé et insonorisé, ledit boîtier comprenant au moins un panneau (6a, 6b) portant des organes de connexion respectivement, fluidiques et électriques, avec, respectivement, d'une part, le condenseur (3) et l'évaporateur (2) et, d'autre part, le circuit électrique du véhicule et un boîtier de contrôle et de commande (19) disposés dans l'habitacle de conduite B, au niveau du tableau de bord.

2. Véhicule selon la revendication 1, caractérisé en ce que le boîtier de la cassette (6) contient un électro-ventilateur (7) générant un flux d'air de refroidissement entre une bouche d'entrée (22) et une bouche de sortie (23), ces deux bouches, ménagées dans la paroi du boîtier, étant reliées par des conduits (24, 25), l'une à une prise d'air extérieur (25), et l'autre à une sortie de refoulement (27) communiquant avec l'extérieur.

3. Véhicule selon la revendication 1, caractérisé en ce que la cassette contient également un auto-transformateur (8) assurant l'alimentation des divers moteurs électriques à partir du secteur lorsque le véhicule est à l'arrêt.

4. Ensemble prêt à être monté dans un véhicule utilitaire tel que défini à la revendication 1, comprenant à l'état de pièces détachées les différents composants requis pour une disposition de l'équipement frigorifique, conforme à la revendication 1.

5. Véhicule selon la revendication 4, caractérisé en ce qu'il comprend une cassette telle que définie à la revendication 1.
